# EUROPEAN PATENT APPLICATION

(11) **EP 1 757 954 A2**
(43) Date of publication of application: **28.02.2007**
(21) Application number: 06017346.5
(22) Date of filing: 21.08.2006
(51) Int. Cl.: G01S 15/89

(54) **System and method of forming an ultrasound spatial compound image**

(30) Priority: 22.08.2005 KR 20050076748
(71) Applicant: MEDISON CO., LTD., Kangwon-do 250-870 (KR)
(72) Inventor: Lee, Tae Ho, Gangnam-gu Seoul 135-280 (KR); Choi, Seok Won, Gangnam-gu Seoul 135-280 (KR)
(74) Representative: Lorenz, Markus

(57) **Abstract**

The present invention provides a system and method of forming a spatial compound image by compounding frames, wherein the frames are obtained by transmitting and receiving ultrasound signals along scan lines having different directions from frame to frame, and wherein at least one frame is formed from first scan lines parallel to each other and second scan lines not parallel to each other and originate from one point.

## Description

The present invention generally relates to a method of forming an ultrasound image, and more particularly to a system and method of forming an ultrasound spatial compound image.

An ultrasound diagnostic system has become an important and popular diagnostic tool due to its wide range of applications. Specifically, due to its non-invasive and non-destructive nature, the ultrasound diagnostic system has been extensively used in the medical profession. Modem high-performance ultrasound diagnostic systems and techniques are commonly used to produce two or three-dimensional diagnostic images of a target object. The ultrasound diagnostic system generally uses a wide bandwidth transducer to transmit and receive ultrasound signals. The ultrasound diagnostic system forms ultrasound images of the internal structures of the target object by electrically exciting the transducer to generate ultrasound pulses that travel into the target object. The ultrasound pulses produce ultrasound echoes since they are reflected from a discontinuous surface of acoustic impedance of the internal structure, which appears as discontinuities to the propagating ultrasound pulses. The various ultrasound echoes return to the transducer and are converted into electrical signals, which are amplified and processed to produce ultrasound data for an image of the tissues.

The ultrasound images, which are formed as described above, tend to include undesirable artifacts such as speckle noises. Various techniques have been studied to reduce the speckle noise, which degrades the image quality. Spatial compounding is known as one of such techniques.

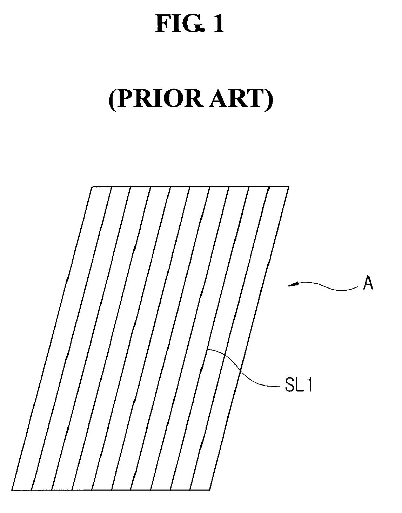

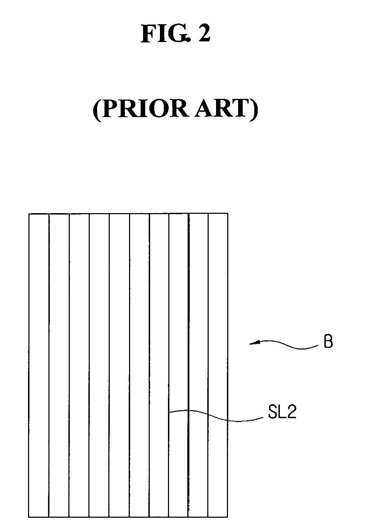

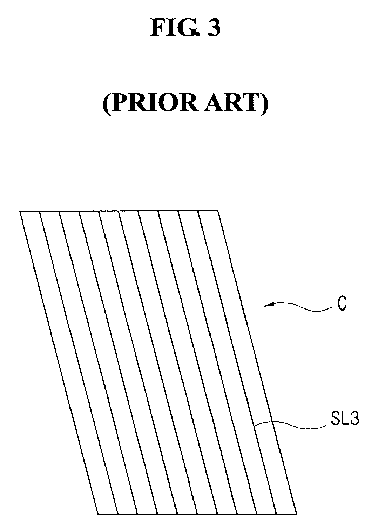

Spatial compounding is an imaging technique for forming a single compound image by combining scan lines in ultrasound image frames obtained from multiple points and angles. A series of ultrasound images (hereinafter referred to as "component frames" or "frames") are obtained for spatial compounding wherein the component frames, which are obtained from substantially independent directions, partially overlap each other. Scan lines are steered in directions different from frame to frame in order to obtain the component frames from independent directions, that is, from different angles. FIGS. 1 to 3 show component frames A, B and C formed from scan lines SL1, SL2 and SL3 directed at angles of -15°,0° and 15°, respectively.

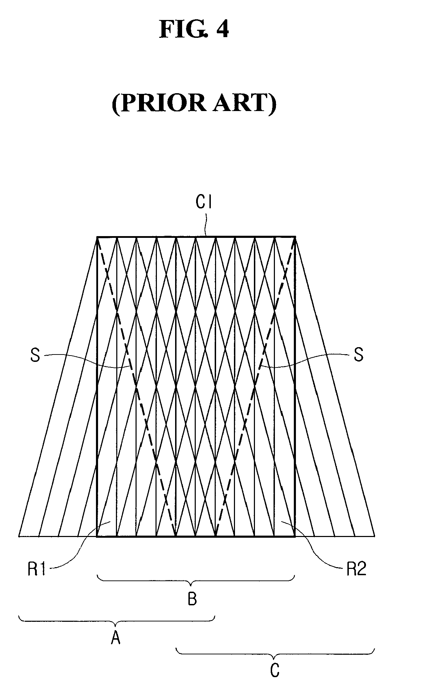

The component frames are combined into the compound image, for example, by summation, averaging, peak detection and the like. In conventional spatial compounding, the component frames A, B and C shown in FIGS. 1 to 3 are combined into a compound image CI as shown in FIG 4. In the compound image CI, there are regions R1 and R2 where all the component frames do not overlap each other. Accordingly, seams S become apparent so as to make image quality non-uniform in the compound image CI.

The present invention provides a system and method of forming an ultrasound spatial compound image while ensuring uniform image quality without an apparent seam.

In accordance with one aspect of the present invention, there is provided a system of forming an ultrasound spatial compound image by compounding a plurality of frames, the system including: a transducer array having a number of transducers for transmitting and receiving ultrasound signals along a number of scan lines for forming each of the frames; a beamformer for delaying and summing the ultrasound signals to produce frame data of each frame; and a compounding unit for forming the ultrasound spatial compound image by compounding the frames, wherein the transducers transmit and receive the ultrasound signals along scan lines having different directions from frame to frame, and wherein at least one frame is formed from first scan lines parallel to each other and second scan lines not parallel to each other and originating from an end point on the transducer array.

In accordance with another aspect of the present invention, there is provided a method of forming an ultrasound spatial compound image by compounding a plurality of frames, the method including: (a) transmitting and receiving ultrasound signals along a number of scan lines for forming each of the frames; (b) delaying and summing the ultrasound signals to produce frame data of each frame; and (c) forming the ultrasound spatial compound image by compounding the frames, wherein in the step (a) the ultrasound signals are transmitted and received along scan lines having different directions from frame to frame, and wherein at least one frame is formed from first scan lines parallel to each other and second scan lines not parallel to each other and originating from one point.

In accordance with the present invention, an ultrasound spatial compound image is obtained by combining data from scan lines of all the component frames in all the regions of the compound image, wherein the ultrasound spatial compound image can be formed while ensuring uniform image quality without an apparent seam.

The above and other objects and features of the present invention will become apparent from the following description of an embodiment given in conjunction with the accompanying drawings, in which:
FIGS. 1 to 3 schematically show scan lines of component frames in a conventional method of forming a spatial compound image;
FIG 4 schematically shows scan lines of the spatial compound image formed from the component frames shown in FIGS. 1 to 3;
FIG 5 is a block diagram showing an ultrasound imaging system of forming an ultrasound spatial compound image in accordance with one embodiment of the present invention;
FIG 6 schematically shows transducers and scan lines of a component frame in accordance with the embodiment of the present invention;
FIGS. 7 and 9 schematically show scan lines of component frames for forming a spatial compound image in accordance with the embodiment of the present invention; and
FIG. 10 schematically shows scan lines of the spatial compound image formed from the component frames shown in FIGS. 7 to 9.

Hereinafter, a system and method of forming an ultrasound spatial compound image in accordance with the present invention will be described with reference to the accompanying drawings.

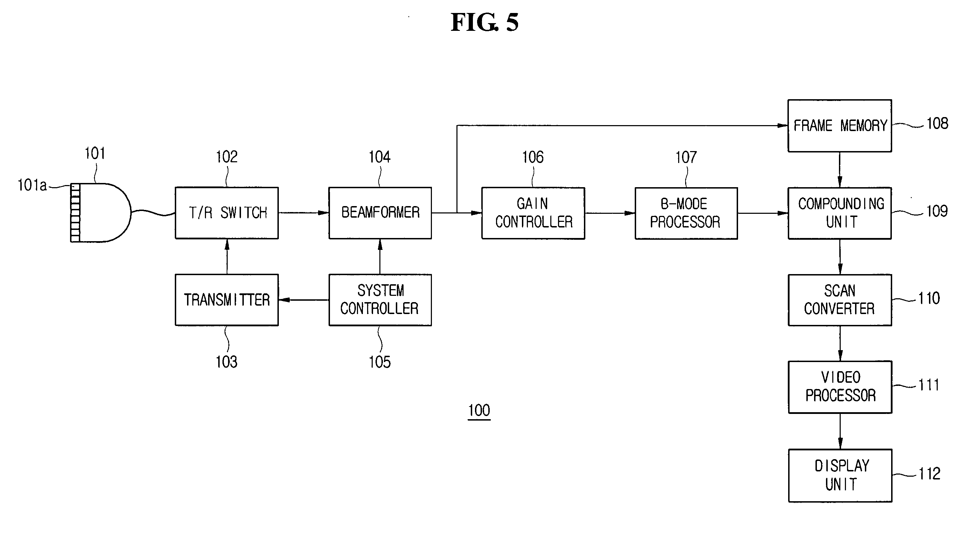

Referring to FIG. 5, an ultrasound imaging system 100 of forming an ultrasound spatial compound image of the present invention includes a scanhead 101, a beamformer 104 and a compounding unit 109. In accordance with one embodiment of the present invention, the system 100 further includes a transmit/receive (T/R) switch 102, a transmitter 103, a system controller 105, a gain controller 106, a B-mode processor 107, a frame memory 108, a scan converter 110, a video processor 111 and a display unit 112.

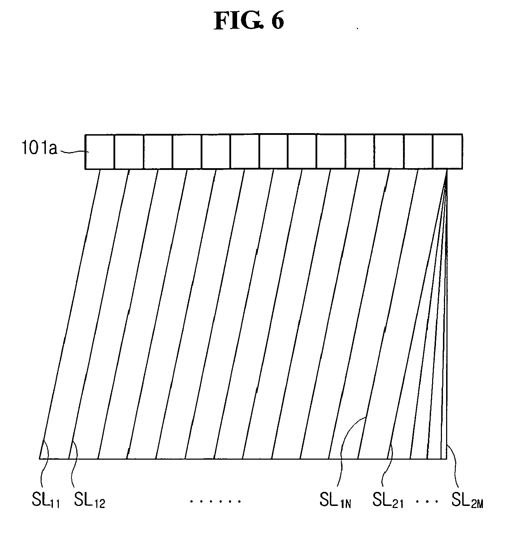

The scanhead 101 includes a transducer array having a number of transducers 101a. As shown in FIG. 6, the transducers 101a transmit and receive ultrasound signals along a number of scan lines for forming each frame. In order to form a plurality of frames for spatial compounding, the transducers 101a of the scanhead 101 transmit and receive ultrasound signals along scan lines different from frame to frame. At least one frame is formed by using ultrasound signals transmitted and received along first scan lines SL₁₁ to SL_{1N} and second scan lines SL₂₁ to SL_{2M}. The first scan lines SL₁₁ to SL_{1N} are parallel to each other, and the second scan lines SL₂₁ to SL_{2M} are not parallel to each other and originate from an end point on the transducer array.

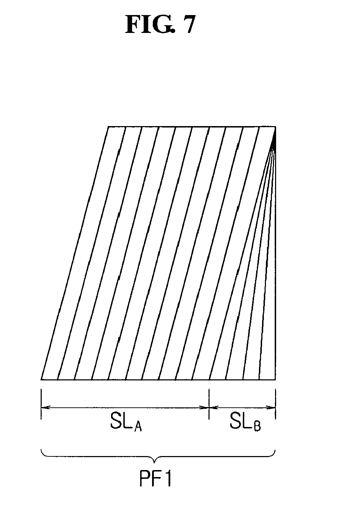

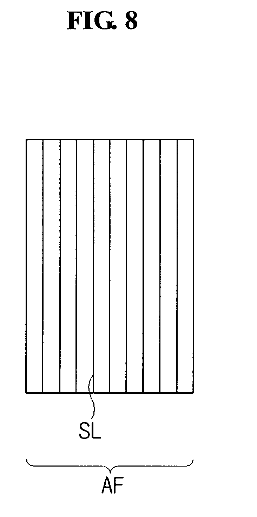

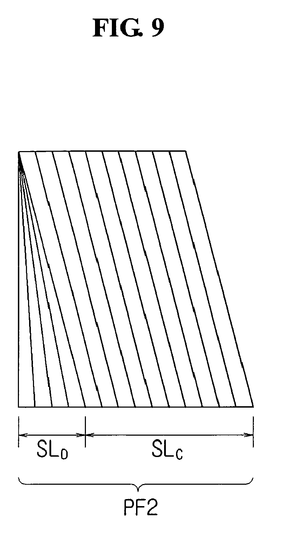

A series of component frames includes a main frame and peripheral frames. The main frame is formed from scan lines that are parallel to each other. The peripheral frames are formed from the first scan lines that are parallel to each other and the second scan lines that are not parallel to each other and originate from one point. Preferably, the second scan lines are denser than the first scan lines. As shown in FIGS. 7 to 9, in case of forming three sequential component frames, i.e., a first peripheral frame PF1, a main frame AF and a second peripheral frame PF2, for spatial compounding, the main frame AF is formed from scan lines SL directed at the same angle and the peripheral frame PF1 (PF2) is formed from first scan lines SL_{A} (SL_{C}) that are parallel to each other and second scan lines SL_{B} (SL_{D}) that are not parallel to each other. Preferably, in the first and second peripheral frames, the first scan lines SL_{A} are symmetric to the first scan lines SL_{C} and the second scan lines SL_{B} are symmetric to the second scan lines SL_{D} with respect to the scan lines SL of the main frame AF.

The T/R switch 102 switches between operations for transmitting and receiving ultrasound signals. The transmitter 103 controls the phases and transmission time of the ultrasound signals transmitted from the transducers 101a of the scanhead 101 in a transmitting mode. The beamformer 104 delays ultrasound signals received by transducers 101a and sums the ultrasound signals to produce frame data.

The system controller 105 controls the operations of the transmitter 103 and the beamformer 104 according to the conditions preset through a user interface (not shown) by a user of the ultrasound imaging system 100. Specifically, the system controller 105 allows ultrasound signals of a specified frequency to travel along scan lines directed at different angles from frame to frame. Further, the system controller 105 controls the beamformer 104 to properly combine transmit and receive signals according to an aperture of the scanhead 101 and an image depth.

The gain controller 106 compensates the gain of the receive signals. The B-mode (brightness-mode) processor 107 produces B-mode image data based on data acquired from the scan lines. The frame memory 108 stores data of frames to be compounded, which are obtained in the beamformer 104.

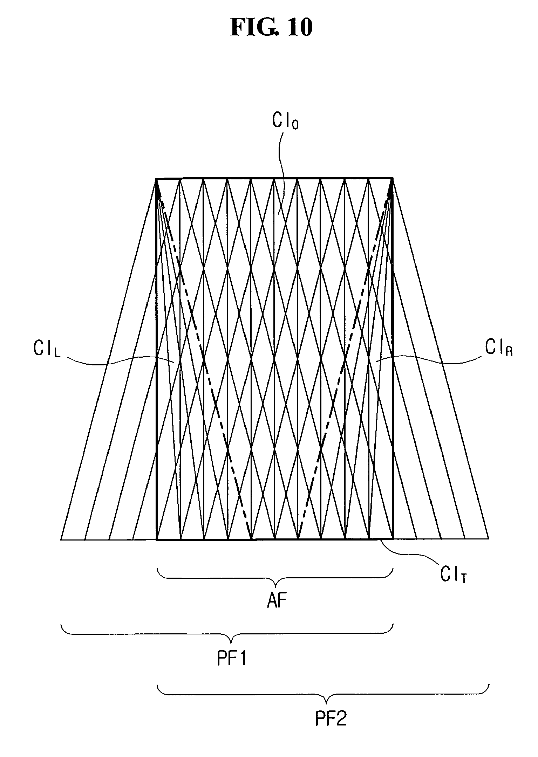

The compounding unit 109 compounds the sequential component frames into an ultrasound spatial compound image. For example, three component frames PF1, AF and PF2 shown in FIGS. 7 to 9 are compounded into an ultrasound spatial compound image CI_{T} shown in FIG. 10. In accordance with the present invention, as shown in FIG 10, scan lines of all the component frames PF1, AF and PF2 overlap each other in first, second and third regions CI₀, CI_{L} and CI_{R} in the ultrasound spatial compound image CI_{T}. That is, the scan lines SL of the main frame AF and the first scan lines SL_{A} and SL_{C} of the peripheral frames PF1 and PF2 overlap each other in the first region CI₀. The scan lines SL of the main frame AF, the first scan lines SL_{A} of the peripheral frame PF1 and the second scan lines SL_{D} of the peripheral frame PF2 overlap each other in the second region CI_{L}. The scan lines SL of the main frame AF, the second scan lines SL_{B} of the peripheral frame PF1 and the first scan lines SL_{C} of the peripheral frame PF2 overlap each other in the third region CI_{R}. Therefore, there is no region without scan lines of any frame in the ultrasound spatial compound image CI_{T} to thereby make its image quality uniform without an apparent seam.

The scan converter 110 converts the data into X-Y format for video display. The video processor 111 converts the scan-converted frame data into appropriate video signals for use in the display unit 112. The display unit 112 displays an ultrasound compound image produced based on the video signals sent from the video processor 111. In the above-mentioned embodiment of the present invention, spatial compounding may be performed after scan conversion.

While the present invention has been described and illustrated with respect to an embodiment of the invention, it will be apparent to those skilled in the art that variations and modifications are possible without deviating from the broad principles and teachings of the present invention which should be limited solely by the scope of the claims appended hereto.

## Claims

1. A system of forming an ultrasound spatial compound image by compounding a plurality of frames, the system comprising:
a transducer array having a number of transducers for transmitting and receiving ultrasound signals along a number of scan lines for forming each of the frames;
a beamformer for delaying and summing the ultrasound signals to produce frame data of each of the frames; and
a compounding unit for forming an ultrasound spatial compound image by compounding the frames,
wherein the transducers transmit and receive the ultrasound signals along scan lines having different directions from frame to frame, and wherein at least one frame is formed from first scan lines parallel to each other and second scan lines not parallel to each other and originating from an end point on the transducer array.

2. The system of Claim 1, wherein the second scan lines are denser than the first scan lines.

3. The system of Claim 1, wherein the frames include a main frame, at least one first peripheral frame and at least one second peripheral frame, wherein the main frame is formed from scan lines parallel to each other, and wherein each of the first and second peripheral frames is formed from the first scan lines and the second scan lines.

4. The system of Claim 3, wherein the first scan lines of the first peripheral frame are symmetric to the first scan lines of the second peripheral frame with respect to the scan lines of the main frame, and wherein the second scan lines of the first peripheral frame are symmetric to the second scan lines of the second peripheral frame with respect to the scan lines of the main frame.

5. A method of forming an ultrasound spatial compound image by compounding a plurality of frames, the method comprising:
(a) transmitting and receiving ultrasound signals along a number of scan lines for forming each of the frames;
(b) delaying and summing the ultrasound signals to produce frame data of said each frame; and
(c) forming the ultrasound spatial compound image by compounding the frames,
wherein in the step (a) the ultrasound signals are transmitted and received along scan lines having different directions from frame to frame, and wherein at least one frame is formed from first scan lines parallel to each other and second scan lines not parallel to each other and originating from one point.

6. The method of Claim 5, wherein the second scan lines are denser than the first scan lines.

7. The method of Claim 5, wherein the frames include a main frame, at least one first peripheral frame and at least one second peripheral frame, wherein the main frame is formed from scan lines parallel to each other, and wherein each of the first and second peripheral frames is formed from the first scan lines and the second scan lines.

8. The method of Claim 7, wherein the first scan lines of the first peripheral frame are symmetric to the first scan lines of the second peripheral frame with respect to the scan lines of the main frame, and wherein the second scan lines of the first peripheral frame are symmetric to the second scan lines of the second peripheral frame with respect to the scan lines of the main frame.
